(19) Europäisches Patentamt
European Patent Office
Office européen des brevets

(11) **EP 4 447 162 A2**

(12) **EUROPEAN PATENT APPLICATION**

(43) Date of publication:
**16.10.2024 Bulletin 2024/42**

(21) Application number: **24197652.1**

(22) Date of filing: **29.03.2023**

(51) International Patent Classification (IPC):
***H01M 4/58*** *(2010.01)*

(52) Cooperative Patent Classification (CPC):
**H01M 4/362; H01M 4/364; H01M 4/5825;**
H01M 2004/027; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.09.2022 KR 20220110435**

(62) Document number(s) of the earlier application(s) in accordance with Art. 76 EPC:
**23164927.8 / 4 340 064**

(71) Applicants:
• **SK On Co., Ltd.**
**Seoul 03161 (KR)**
• **SK Innovation Co., Ltd.**
**Seoul 03188 (KR)**

(72) Inventors:
• **MOON, Joon Hyung**
**34124 Daejeon (KR)**
• **PARK, Eun Jun**
**34124 Daejeon (KR)**
• **YU, Do Ae**
**34124 Daejeon (KR)**
• **CHUNG, Ju Ho**
**34124 Daejeon (KR)**

(74) Representative: **Bird & Bird LLP**
**Maximiliansplatz 22**
**80333 München (DE)**

Remarks:
This application was filed on 30-08-2024 as a divisional application to the application mentioned under INID code 62.

(54) **ANODE ACTIVE MATERIAL FOR LITHIUM SECONDARY BATTERY AND LITHIUM SECONDARY BATTERY INCLUDING THE SAME**

(57) An anode active material for a secondary battery according to an embodiment of the present invention includes lithium-silicon composite oxide particle. The lithium-silicon composite oxide particles include at least one of $Li_2SiO_3$ and $Li_2Si_2O_5$ and have a phase fraction ratio defined by Equation 1 of 1.0 or less. A content of particles having a diameter of less than 3 $\mu$m is 5 vol% or less based on a total volume of the lithium-silicon composite oxide particles.

FIG. 1

**Description**

BACKGROUND

1. Field

The present invention relates to an anode active material for a lithium secondary battery and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery has been developed and applied as a power source for an eco-friendly vehicle such as an electric vehicle.

The secondary battery includes, e.g., a lithium secondary battery, a nickelcadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

Recently, as an application range of the lithium secondary battery is expanded, the lithium secondary battery having higher capacity and power has been researched. For example, a silicon-based material having a high capacity such as silicon oxide may be used as an anode active material.

However, silicon oxide may have a low volume expansion ratio to provide enhanced life-span property, but may cause degradation of an initial efficiency due to a formation of an irreversible phase at an initial charge stage.

Accordingly, an anode active material having improved life-span property and initial efficiency is required. For example, Korean Registered Patent Publication No. 10-1591698 discloses an anode active material containing silicon oxide.

SUMMARY

According to an aspect of the present invention, there is provided an anode active material for a lithium secondary battery having improved initial efficiency and life-span property.

According to an aspect of the present invention, there is provided a secondary battery including an anode active material with improved initial efficiency and life-span property.

An anode active material for a lithium secondary battery includes lithium-silicon composite oxide particles. The lithium-silicon composite oxide particles comprise $Li_2SiO_3$ and optionally $Li_2Si_2O_5$ and have a phase fraction ratio defined by Equation 1 of 1.0 or less. The content of lithium-silicon composite oxide particles having a diameter of less than 3 $\mu$m is 5 vol% or less based on a total volume of the lithium-silicon composite oxide particles.

$$[\text{Equation 1}]$$

$$\text{phase fraction ratio} = I(225)/I(213)$$

In Equation 1, I(225) is a phase fraction of $Li_2Si_2O_5$ obtained by a Rietveld Refinement using an X-ray diffraction (XRD) analysis, and I(213) is a phase fraction of $Li_2SiO_3$ obtained by the Rietveld Refinement using the XRD analysis.

In some embodiments, the phase fraction ratio may be in a range from 0.05 to 0.8.

In some embodiments, the content of lithium contained in the lithium-silicon composite oxide particles may be in a range from 2 wt% to 10 wt% based on a total weight of the lithium-silicon composite oxide particles.

In some embodiments, the content of lithium contained in the lithium-silicon composite oxide particles may be in a range from 4 wt% to 9 wt% based on the total weight of the lithium-silicon composite oxide particles.

In some embodiments, an average particle diameter (D50) of the lithium-silicon composite oxide particles may be in a range from 4 $\mu$m to 10 $\mu$m.

In some embodiments, the lithium-silicon composite oxide particles may further include an amorphous carbon. Preferably, the amorphous carbon is coated onto the lithium-silicon composite oxide particles.

In some embodiments, the amorphous carbon may include at least one selected from the group consisting of soft carbon, hard carbon, a mesophase pitch oxide and a pyrolyzed coke.

In some embodiments, the content of the amorphous carbon may be in a range from 1 wt% to 25 wt% based on a total weight of the lithium-silicon composite oxide particles.

In some embodiments, the anode active material may further include graphite-based particles including at least one selected from the group consisting of natural graphite and artificial graphite.

In some embodiments, the content of the lithium-silicon composite oxide particles may be in a range from 5 wt% to 40 wt% based on a total weight of the lithium-silicon composite oxide particles and the graphite-based particles.

A lithium secondary battery includes a cathode, and an anode facing the cathode and including the anode active material for a lithium secondary battery according to the embodiments according to the present invention.

In a method of preparing an anode active material for a lithium secondary battery, a first firing of at least one, preferably at least two, silicon source(s) is performed to form silicon oxide particles. The silicon oxide particles are injected into a separation apparatus to remove particles having a particle size of less than 3 $\mu$m. A second firing of a mixture of at least one lithium source and the silicon oxide particles from which the particles having a particle size of less than 3 $\mu$m are removed is performed to form lithium-silicon composite oxide particles that include $Li_2SiO_3$, preferably in combination with $Li_2Si_2O_5$. A phase fraction ratio defined by Equation 1 of the lithium-silicon composite oxide particles is 1.0 or less.

$$[\text{Equation 1}]$$

$$\text{phase fraction ratio} = I(225)/I(213)$$

In Equation 1, I(225) is a phase fraction of $Li_2Si_2O_5$ obtained by a Rietveld Refinement using an X-ray diffraction (XRD) analysis, and I(213) is a phase fraction of $Li_2SiO_3$ obtained by the Rietveld Refinement using the XRD analysis.

In some embodiments, the at least one, preferably at least two, silicon source(s) may include silicon particles and $SiO_2$ particles.

In some embodiments, the separation apparatus may include a centrifugal force dust collector.

In some embodiments, wherein the at least one lithium source may include at least one selected from the group consisting of LiOH, Li, LiH, $Li_2O$ and $Li_2CO_3$.

In some embodiments, the ratio of the number of moles of lithium contained in the at least one lithium source relative to the number of moles of silicon contained in the silicon oxide particles is in a range from 0.3 to 0.8.

In an aspect of the present invention, an anode active material for a lithium secondary battery prepared by a method that includes performing a first firing of at least one, preferably at least two, silicon source(s) to form silicon oxide particles; injecting the silicon oxide particles into a separation apparatus to remove particles having a particle size of less than 3 $\mu$m; and performing a second firing of a mixture of at least one lithium source and the silicon oxide particles from which the particles having a particle size of less than 3 $\mu$m are removed to form lithium-silicon composite oxide particles comprising at least one of $Li_2SiO_3$ and $Li_2Si_2O_5$ is provided.

In an aspect of the present invention, a lithium secondary battery including the anode active material prepared by the above-described method is provided.

An anode active material for a lithium secondary battery includes a lithium-silicon composite oxide particle including $Li_2SiO_3$, preferably in combination with $Li_2Si_2O_5$. The lithium-silicon composite oxide particle may have a phase fraction ratio defined by Equation 1 of 1.0 or less, and a micro-powder content of less than 5 vol% relative to a total volume. Accordingly, capacity properties of the anode active material may be improved, and an initial capacity efficiency may also be improved.

In some embodiments, the content of lithium included in the lithium-silicon composite oxide particles relative to a total weight of the lithium-silicon composite oxide particle may be in a range from 2 wt% to 10 wt%. Within this range, $Li_2SiO_3$ may be sufficiently formed through the above-described micro-powder control while preventing an excessive increase of the lithium content. Thus, output power properties may be improved while maintaining capacitance properties of the anode active material.

In some embodiments, the lithium-silicon composite oxide particle may further include an amorphous carbon. Accordingly, electrical conductivity of the lithium-silicon composite oxide particle may be improved, and swelling of the anode active material may be suppressed during charging and discharging.

BRIEF DESCRIPTION OF THE DRAWINGS

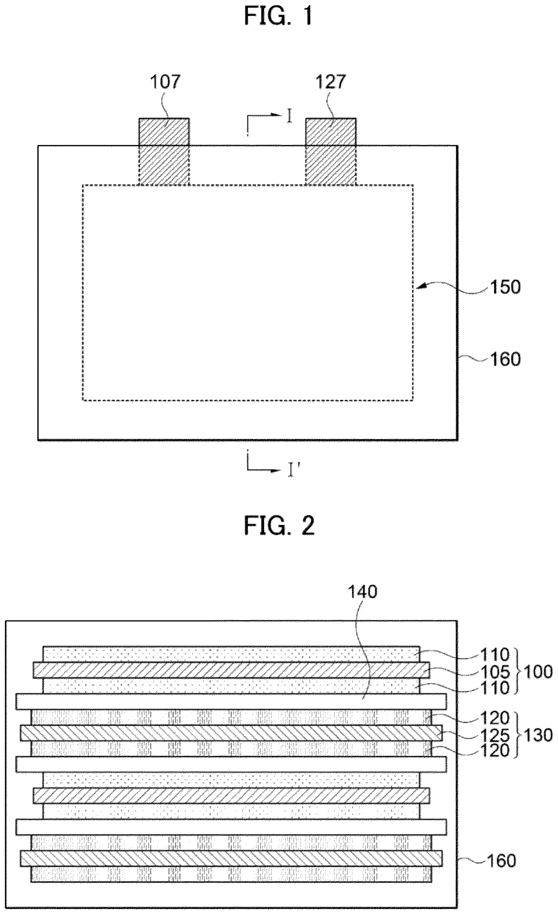

FIGS. 1 and 2 are a schematic plan view and a schematic cross-sectional view illustrating a secondary battery in accordance with exemplary embodiments.

DETAILED DESCRIPTION OF THE EMBODIMENTS

According to embodiments of the present invention, an anode active material for a secondary battery including a lithium-silicon compound is provided. According to embodiments of the present invention, a lithium secondary battery including the anode active material is also provided.

Hereinafter, detailed descriptions of the present invention will be described in detail with reference to exemplary embodiments. However, those skilled in the art will appreciate that such embodiments are provided to further understand the spirit of the present invention and do not limit subject matters to be protected as disclosed in the detailed description and appended claims.

The terminology used herein is for the purpose of describing particular example embodiments only and is not intended to be limiting of the present inventive concept. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

According to embodiments of the present invention, an anode active material for a lithium secondary battery (hereinafter, that may be abbreviated as an anode active material) includes a lithium-silicon composite oxide particle.

For example, the anode active material may further include silicon oxide (SiOx, $0<x\leq2$). Accordingly, power properties may be improved while obtaining high capacity properties.

The lithium-silicon composite oxide particle includes at least one of $Li_2SiO_3$ and $Li_2Si_2O_5$.

For example, the lithium-silicon composite oxide particles include $Li_2SiO_3$ and may optionally further include $Li_2Si_2O_5$.

For example, a consumption of silicon may be reduced in $Li_2SiO_3$ compared to that in $Li_2Si_2O_5$, and thus capacity properties and an initial capacity efficiency of the anode active material may be improved.

The lithium-silicon composite oxide particles have a phase fraction ratio defined by Equation 1 below of 1.0 or less, preferably from 0.05 to 0.8.

$$[\text{Equation 1}]$$

$$\text{phase fraction ratio} = I(225)/I(213)$$

In Equation 1, I(225) is a phase fraction of $Li_2Si_2O_5$ obtained by a Rietveld Refinement using an X-ray diffraction (XRD) analysis, and I(213) is a phase fraction of $Li_2SiO_3$ obtained by the Rietveld Refinement using the XRD analysis.

For example, the Rietveld Refinement analysis may include a method where an XRD pattern obtained by actually measuring a target material is compared with an XRD pattern of a reference sample (structural information of which is disclosed) to determine a phase fraction and/or a lattice structure. If the target material has two or more crystalline phases, a phase fraction of each phase may be obtained by assuming that the sum of all phase fractions is 100%.

For example, after measuring the X-ray diffraction pattern of the target material, the phase fraction and/or the lattice structure of each phase may be obtained with reference to a diffraction pattern of the target material registered in an online database (DB).

For example, a phase fraction of each of Si, $Li_2Si_2O_5$ and $Li_2SiO_3$ may be calculated through the Rietveld Refinement, and then the phase fraction ratio may be obtained by substituting the calculation results into Equation 1.

For example, the phase fractions may be measured based on a reference code ICSD (Inorganic Crystal Structure Database) 98-024-6975 for Si, a reference code ICSD 98-010-0402 for $Li_2SiO_3$, and a reference code ICSD 98-001-5414 for $Li_2Si_2O_5$ registered in the online database (https://icsd.products.fiz-karlsruhe.de/en/products/icsd-products).

For example, a Si crystalline peak may be at least one of about 28.2°, 47.0° and 55.7°, and a $Li_2SiO_3$ crystalline peak may be at least one of about 18.9°, 19.0°, 27.0°, 33.0° and 38.6°, and a $Li_2Si_2O_5$ crystalline peak may be at least one of about 23.8°, 24.3°, 24.8° and 37.5°.

Within the above phase fraction ratio range, the $Li_2SiO_3$ phase may be formed in an excess of the $Li_2Si_2O_5$ phase. Accordingly, the capacity properties and initial efficiency of the anode active material may be improved.

For example, lithium may be mixed and/or doped in silicon oxide to from the lithium-silicon composite oxide particle. In this case, as a content of a micro-powder (e.g., particles having a particle diameter of less than 3 $\mu$m) of silicon oxide increases, a lithium consumption may be increased. For example, an amount of a lithium input may be increased so as to sufficiently form $Li_2SiO_3$.

A content of the lithium-silicon composite oxide particle having a particle diameter of less than 3 $\mu$m is 5 volume percent (vol%) or less based on a total volume of the lithium-silicon composite oxide particles. Within the above range, the content of lithium consumed when silicon oxide is doped with lithium may be reduced. Thus, $Li_2SiO_3$ may be sufficiently

formed even when a relatively small amount of lithium is introduced.

The content of particles having a particle size of less than 3 $\mu$m may be measured using a particle size distribution (PSD) graph of the lithium-silicon composite oxide particles obtained through a particle size analyzer.

In some embodiments, the content of lithium included in the lithium-silicon composite oxide particles based on a total weight of the lithium-silicon composite oxide particles may be in a range from 2 weight percent (wt%) to 10 wt%, preferably from 4 wt% to 9 wt%. Within this range, $Li_2SiO_3$ may be sufficiently formed through the above-described micro-powder control while preventing an excessive increase of the lithium content. Thus, the power properties may be improved while maintaining the capacity properties of the anode active material.

In some embodiments, an average particle diameter (D50) of the lithium-silicon composite oxide particles may be in a range from 4 $\mu$m to 10 $\mu$m, preferably from 5 $\mu$m to 9 $\mu$m. Within this range, a BET specific surface area of the lithium-silicon composite oxide particles may be controlled, and mechanical strength may be improved. Accordingly, side reactions between the anode active material and an electrolyte, and generation of cracks in the anode active material may be suppressed.

The terms "average particle diameter (D50)", "average particle diameter" and "D50" as used herein may be defined as a particle diameter when a volumetric cumulative percentage corresponds to 50% in a particle size distribution obtained from particle volumes.

In some embodiments, the lithium-silicon composite oxide particle may further include an amorphous carbon. In an embodiment, the amorphous carbon may be coated on a surface of the lithium-silicon composite oxide particle. Accordingly, an electrical conductivity of the lithium-silicon composite oxide particle may be improved, and swelling of the anode active material may be suppressed during charging and discharging.

The amorphous carbon may include, e.g., at least one selected from the group consisting of soft carbon, hard carbon, a mesophase pitch oxide and a pyrolyzed coke.

In some embodiments, a content of amorphous carbon may be in a range from 1 wt% to 25 wt%, preferably from 2 wt% to 15 wt%, more preferably from 3 wt% to 10 wt% based on the total weight of the lithium-silicon composite oxide particles. Within the above range, a capacity retention during repeated charging and discharging may be improved while sufficiently improving the power characteristics of the lithium-silicon composite oxide particle.

In some embodiments, the anode active material may further include graphite-based particles including at least one selected from the group consisting of natural graphite and artificial graphite.

For example, the graphite-based particles may have a random shape, a plate shape, a flake shape, a spherical shape or a fibrous shape.

In some embodiments, a content of the lithium-silicon composite oxide particles may be in a range from 1 wt% to 50 wt%, preferably from 5 wt% to 40 wt%., more preferably from 10 wt% to 40 wt% based on a total weight of the lithium-silicon composite oxide particles and the graphite-based particles. Within the above range, the capacity retention and the power properties of the lithium secondary battery may be improved.

For example, the anode active material may include a plurality of the lithium-silicon composite oxide particles and a plurality of the graphite-based particles.

For example, an amount of the lithium-silicon composite oxide particles in the total weight of the anode active material (e.g., the total weight of the lithium-silicon composite oxide particles and the graphite-based particles) may be in a range from 3 wt% or more, 5 wt% or more, 10 wt% or more, 15 wt% or more, 20 wt% or more, 25 wt% or more, 30 wt% or more, 35 wt% or more, 40 wt% or more, or 45 wt% or more.

The amount of the lithium-silicon composite oxide particles in the total weight of the anode active material may be 90 wt% or less, 85 wt% or less, 80 wt% or less, 75 wt% or less, 70 wt% or less, 65 wt% or less, 60 wt% or less, 55 wt% or less, or 50 wt% or less.

In an embodiment, the anode active material may substantially consist of the lithium-silicon composite oxide particles and the graphite-based particles.

Hereinafter, a method of preparing the above-described anode active material according to exemplary embodiments is provided in more detail.

In exemplary embodiments, at least two, preferably exactly two, silicon sources may be mixed and a first firing may be performed to silicon oxide (SiOx, 0<x$\leq$2) particles.

For example, the silicon source may include silicon (Si) particles and $SiO_2$ particles. The silicon sources may be mixed in a powder form.

For example, the first firing may be performed by heat-treating the mixed silicon sources at a temperature of 500 °C to 1,600 °C for 1 hour to 12 hours under an inert atmosphere and reduced pressure.

In exemplary embodiments, the prepared silicon oxide particles may be introduced into a separation apparatus to remove particles having a particle diameter of less than 3 $\mu$m.

The separation apparatus may include, e.g., a centrifugal force dust collector (cyclone).

In exemplary embodiments, the silicon oxide particles from which the particle having a particle diameter of less than 3 $\mu$m are removed may be mixed with at least one lithium source, and a second firing may be performed to form lithium-silicon composite oxide particles including at least one of $Li_2SiO_3$ and $Li_2Si_2O_5$. For example, the prepared lithium-silicon composite oxide particles may have a phase fraction ratio defined by Equation 1 of 1.0 or less.

For example, the lithium source may include at least one selected from the group consisting of LiOH, Li, LiH, $Li_2O$ and $Li_2CO_3$.

For example, the second firing may be performed by a heat treatment at a temperature of 500 °C to 1,000 °C for 1 hour to 12 hours in an inert atmosphere. Preferably, the second firing may be performed at a temperature of 500 °C to 700 °C. In the second firing condition, a production yield of the lithium-silicon composite oxide particles (e.g., $Li_2SiO_3$) capable of suppressing a volume expansion of silicon oxide may be increased.

In some embodiments, the ratio (Li/Si) of the number of moles of lithium included in the lithium source relative to the number of moles of silicon included in the silicon oxide particles may be in a range from 0.3 to 0.8. Within this range, the initial efficiency may be improved while maintaining the capacity properties of the lithium secondary battery.

FIGS. 1 and 2 are a schematic plan view and a schematic cross-sectional view, respectively, illustrating a secondary battery according to exemplary embodiments. For example, FIG. 2 is a cross-sectional view taken along a line I-I' in FIG. 1 in a thickness direction of the lithium secondary battery.

Referring to FIGS. 1 and 2, a lithium secondary battery may include an electrode assembly including an anode 130, a cathode 100 and a separation layer 140 interposed between the cathode and the anode. The electrode assembly may be accommodated and impregnated with an electrolyte in a case 160.

The cathode 100 may include a cathode active material layer 110 formed by coating a mixture containing a cathode active material on a cathode current collector 105.

The cathode current collector 105 may include aluminum, stainless steel, nickel, titanium, or an alloy thereof, or aluminum or stainless steel surface-treated with carbon, nickel, titanium, silver, etc.

The cathode active material may include a compound capable of reversibly intercalating and de-intercalating lithium ions.

In exemplary embodiments, the cathode active material may include a lithium-transition metal oxide. For example, the lithium-transition metal oxide includes nickel (Ni) and may further include at least one of cobalt (Co) and manganese (Mn).

For example, the lithium-transition metal oxide may be represented by Chemical Formula 1 below.

[Chemical Formula 1]  $Li_xNi_{1-y}M_yO_{2+z}$

In Chemical Formula 1, $0.9 \leq x \leq 1.2$, $0 \leq y \leq 0.7$, and $-0.1 \leq z \leq 0.1$. M may include at least one element selected from Na, Mg, Ca, Y, Ti, Hf, V, Nb, Ta, Cr, Mo, W, Mn, Co, Fe, Cu, Ag, Zn, B, Al, Ga, C, Si, Sn and Zr.

In some embodiments, a molar ratio or a concentration (1-y) of Ni in Chemical Formula 1 may be greater than or equal to 0.8, and may exceed 0.8 in preferable embodiment.

The mixture may be prepared by mixing and stirring the cathode active material in a solvent with a binder, a conductive material and/or a dispersive agent. The mixture may be coated on the cathode current collector 105, and then dried and pressed to form the cathode 100.

The solvent may include a non-aqueous solvent. For example, N-methyl-2-pyrrolidone (NMP), dimethylformamide, dimethylacetamide, N,N-dimethylaminopropylamine, ethylene oxide, tetrahydrofuran, etc., may be used.

For example, the binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material may be relatively increased. Thus, capacity and power of the lithium secondary battery may be further improved.

The conductive material may be included to promote an electron movement between active material particles. For example, the conductive material may include a carbon-based conductive material such as graphite, carbon black, graphene, carbon nanotube, etc., and/or a metal-based conductive material such as tin, tin oxide, titanium oxide, a perovskite material such as $LaSrCoO_3$, $LaSr_4MnO_3$, etc.

In exemplary embodiments, an anode slurry may be prepared from the above-described anode active material including the lithium-silicon composite oxide particle. For example, the anode slurry may be prepared by mixing and stirring the anode active material with an anode binder, a conductive material and a thickener in a solvent.

For example, the solvent included in the anode slurry may be an aqueous solvent such as water, an aqueous hydrochloric acid solution, or an aqueous sodium hydroxide solution, etc.

For example, the anode binder may include a polymer material such as styrene-butadiene rubber (SBR). Examples of the thickener include carboxymethyl cellulose (CMC).

For example, the conductive material may include a material of the same type as that of the above-described conductive material included for forming the cathode active material layer.

In some embodiments, the anode 130 may include an anode active material layer 120 formed by applying (coating) the above-described anode slurry on at least one surface of an anode current collector 125 and then drying and pressing the anode slurry.

For example, the anode current collector 125 may include a metal that has high conductivity, and may be easily adhered to the anode slurry and non-reactive within a voltage range of the battery. For example, stainless steel, nickel, copper, titanium, an alloy thereof, or copper or stainless steel surface-treated with carbon, nickel, titanium or silver may be used.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may be also formed from a non-woven fabric including a glass fiber with a high melting point, a polyethylene terephthalate fiber, or the like.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without loss by, e.g., precipitation or sedimentation. Thus, capacity and power of the lithium secondary battery may be improved.

In exemplary embodiments, an electrode cell may be defined by the cathode 100, the anode 130 and the separation layer 140, and a plurality of the electrode cells may be stacked to form the electrode assembly 150 having, e.g., a jelly roll shape. For example, the electrode assembly 150 may be formed by winding, laminating or folding of the separation layer 140.

The electrode assembly 150 may be accommodated together with an electrolyte in the case 160 to define the lithium secondary battery. In exemplary embodiments, a non-aqueous electrolyte may be used as the electrolyte.

For example, the non-aqueous electrolyte may include a lithium salt and an organic solvent. The lithium salt and may be represented by $Li^+X^-$. An anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 1, electrode tabs (a cathode tab and an anode tab) may protrude from the cathode current collector 105 and the anode electrode current collector 125 included in each electrode cell to one side of the case 160. The electrode tabs may be welded together with the one side of the case 160 to form an electrode lead (a cathode lead 107 and an anode lead 127) extending or exposed to an outside of the case 160.

The lithium secondary battery may be manufactured in, e.g., a cylindrical shape using a can, a square shape, a pouch shape or a coin shape.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

Example 1

Preparation of lithium-silicon composite oxide particles

A raw material in which a Si powder and a $SiO_2$ powder were mixed was introduced into a reactor, and a first firing was performed at a reduced pressure of 10 Pa and a temperature of 600 °C for 5 hours to obtain a mixture. The mixture was deposited on an adsorption plate and cooled sufficiently, the deposit was collected and pulverized with a ball mill to prepare silicon oxide particles in the form of SiO.

The prepared silicon oxide particles were put into a centrifugal force dust collector (cyclone) to separate and remove a micro-powder having a particle diameter of less than 3 μm.

The silicon oxide particles from which the micro-powder was removed and a LiOH powder were mixed so that a Li/Si molar ratio was 0.70. The mixed powder and a zirconia ball were put into an airtight container and mixed for 30 minutes using a shaker. Thereafter, the mixed powder was filtered using a 25 μm to 500 μm sieve and placed in an alumina crucible.

A second firing was performed by heating the alumina crucible at 800 °C for 8 hours in a nitrogen gas atmosphere, and then pulverized to prepare lithium-silicon composite oxide particles. An average particle diameter (D50) of the prepared lithium-silicon composite oxide particles was 6.7 $\mu$m.

### Fabrication of anode

90 wt% of the prepared lithium-silicon composite oxide particles, 3 wt% of styrene-butadiene rubber (SBR) as a binder, 2 wt% of Super C as a conductive material, and 5 wt% of carboxymethyl cellulose (CMC) as a thickener were mixed to form an anode slurry.

The anode slurry was coated on a copper substrate, and dried and pressed to obtain an anode.

### Fabrication of Li-half cell

A lithium secondary battery was manufactured using the anode manufactured as described above and a lithium metal as a counter electrode (cathode).

Specifically, a lithium coin half-cell was constructed by interposing a separator (polyethylene, thickness of 20 $\mu$m) between the prepared anode and the lithium metal (thickness of 1 mm).

The assembly of lithium metal/separator/cathode was placed in a coin cell plate, an electrolyte was injected, a cap was covered, and then clamped. The electrolyte was prepared by preparing a 1M $LiPF_6$ solution using a mixed solvent of EC/EMC (3:7; volume ratio), and then adding 2.0 vol% of FEC based on a total volume of the electrolyte. An impregnation for 3 to 24 hours after clamping was performed, and then 3 cycles of charging and discharging at 0.1C were performed (charging condition CC-CV 0.1C 0.01V 0.01C CUT-OFF, discharging condition CC 0.1C 1.5V CUT-OFF).

### Examples 2 to 10 and Comparative Examples 1 to 3

Lithium-silicon composite oxide particles, anodes and lithium half-cells were prepared by the same method as that in Example 1, except that the phase fraction ratio defined by Equation 1 of the lithium-silicon composite oxide particles, the content of particles having a particle diameter of less than 3 $\mu$m, the content of the lithium element, and the Li/Si molar ratio were adjusted as described in Table 1.

### Example 11

Lithium-silicon composite oxide particles, an anode and a lithium half-cell were prepared by the same method as that in Example 1, except that lithium-silicon composite oxide particles coated with amorphous carbon were prepared by adding 10 wt% of soft carbon based on a total weight of the lithium-silicon composite oxide particles.

### Experimental example

### (1) Measurement of phase fraction ratio

A phase fraction of $Li_2Si_2O_5$ (I(225)) and a phase fraction of $Li_2SiO_3$ (I(213)) were obtained by a Rietveld Refinement analysis using an XRD analysis for the lithium-silicon composite oxide particles prepared according to Examples and Comparative Examples.

Specifically, an X-ray diffraction pattern was measured by the XRD analysis of the lithium-silicon composite oxide particles prepared according to Examples and Comparative Examples.

Data of the $Li_2Si_2O_5$ phase and the $Li_2SiO_3$ phase among the measured X-ray diffraction patterns were compared with X-ray diffraction patterns of $Li_2Si_2O_5$ and $Li_2SiO_3$ reference codes (ICSD 98-001-5414 and ICSD 98-010-0402) registered in online database (https://icsd.products.fiz-karlsruhe.de/en/products/icsd-products) to obtain the phase fractions of $Li_2Si_2O_5$ and $Li_2SiO_3$.

A phase fraction ratio was calculated by substituting the obtained phase fractions into Equation 1.

Specific XRD analysis equipment/conditions are shown in Table 1 below.

[Table 1]

| XRD(X-Ray Diffractometer) | |
| --- | --- |
| Maker | PANalytical |
| Model | EMPYREAN |
| Anode material | Cu |

(continued)

| XRD(X-Ray Diffractometer) | |
|---|---|
| K-Alpha1 wavelength | 1.540598 Å |
| Generator voltage | 45 kV |
| Tube current | 40 mA |
| Scan Range | 10~70° |
| Scan Step Size | 0.0065° |
| Divergence slit | 1/4° |
| Antiscatter slit | 1° |

(2) Measurement of micro-powder content

A particle size distribution (PSD) graph of the lithium-silicon composite oxide particles in each of Examples and Comparative Examples was obtained using a particle size analyzer (LA 950V2, Horiba Co.), and then a content of particles having a particle diameter of less than 3 $\mu$m was measured as volume %.
Specifically, the content of particles having a particle diameter of less than 3 $\mu$m was calculated in terms of volume% by integrating the PSD graph in a range of particle diameters of less than 3 $\mu$m in the PSD graph.

(3) Measurement of lithium element content

A content of lithium element in the lithium-silicon composite oxide particles according to each of Examples and Comparative Examples was measured using an ICP (Inductively Coupled Plasma Spectrometer) analysis.
Specifically, a lithium-silicon composite oxide particle sample, nitric acid, and a trace amount of hydrofluoric acid were put into a polypropylene (PP) tube, and a cap was closed to seal the tube. After shaking the PP tube, the PP tube was maintained at room temperature to proceed with dissolution. After the sample was dissolved, the PP tube was stored in a refrigerator to cool the sample. Saturated boric acid water was added to the cooled sample to neutralize hydrofluoric acid, and then diluted with ultrapure water. An input solution was obtained by removing carbon components remaining in the sample with a 0.45 $\mu$m syringe filter.
The obtained input solution was put into an ICP analyzer (NexION 350S, PerkinElmer Co.) to measure the content of lithium element in the lithium-silicon composite oxide particles.

(4) Detection of amorphous carbon coating

The lithium-silicon composite oxide particles prepared according to Examples and Comparative Examples were subjected to an EA (Elemental Analyzer) analysis to evaluate whether amorphous carbon was coated. Specifically, it was confirmed whether a carbon element was detected in the lithium-silicon composite oxide particles.
The detection of the carbon element in the lithium-silicon composite oxide particles was expressed as follows.

O: amorphous carbon was included

×: amorphous carbon was not detected

The measurement results of the above (1) to (4) are shown in Table 2 below.

[Table 2]

| No. | phase fraction ratio | micro-powder content (vol%) | lithium element content (wt%) | Li/Si molar ratio | presence of amorphous carbon |
|---|---|---|---|---|---|
| Example 1 | 0 | 1 | 9.6 | 0.7 | × |
| Example 2 | 0.05 | 1 | 8.2 | 0.6 | × |
| Example 3 | 0.12 | 1 | 6.7 | 0.5 | × |
| Example 4 | 0.88 | 1 | 5.3 | 0.4 | × |

(continued)

| No. | phase fraction ratio | micro-powder content (vol%) | lithium element content (wt%) | Li/Si molar ratio | presence of amorphous carbon |
|---|---|---|---|---|---|
| Example 5 | 0.24 | 5 | 9.5 | 0.7 | × |
| Example 6 | 0 | 1 | 11.5 | 0.8 | × |
| Example 7 | 0.93 | 1 | 1.5 | 0.32 | × |
| Example 8 | 0.91 | 1 | 3.8 | 0.38 | × |
| Example 9 | 0.97 | 1 | 3.1 | 0.2 | × |
| Example 10 | 0 | 1 | 12.1 | 0.9 | × |
| Example 11 | 0.05 | 1 | 8.4 | 0.6 | ○ |
| Comparative Example 1 | 3.57 | 1 | 3.9 | 0.3 | × |
| Comparative Example 2 | 1.15 | 10 | 9.4 | 0.7 | × |
| Comparative Example 3 | 0.99 | 6.5 | 9.4 | 0.7 | × |

(5) Evaluation on initial discharge capacity and initial capacity efficiency

Charge (CC-CV 0.1C 0.01V 0.01C CUT-OFF) and discharge (CC 0.1C 1.5V CUT-OFF) as one cycle were performed for the lithium half-cells manufactured according to the above-described Examples and Comparative Examples at room temperature (25 °C), and then an initial discharge capacity was measured.
10 cycles of the charge and discharge were performed, and then a discharge capacity was measured. The measured discharge capacity was divided by the initial charging capacity to measure an initial capacity efficiency.

(6) Evaluation of capacity retention (50 cycles)

50 cycles of charge (CC-CV 0.5C 0.01V 0.01C CUT-OFF) and discharge (CC 0.5C 1.5V CUT-OFF) were performed for the lithium half-cells manufactured according to the above-described Examples and Comparative Examples at room temperature (25 °C) to measure discharge capacity. A 10-minute interphase was inserted between the cycles. The measured discharge capacity was divided by the initial discharge capacity measured in (5) above to obtain a capacity retention as a percentage.
The evaluation results are shown in Table 3 below.

[Table 3]

| No. | initial discharge capacity (mAh/g) | initial capacity efficiency (%) | capacity retention (50 cycles) (%) |
|---|---|---|---|
| Example 1 | 1302 | 92.2 | 91.0 |
| Example 2 | 1323 | 89.4 | 91.3 |
| Example 3 | 1334 | 87.1 | 90.9 |
| Example 4 | 1351 | 86.3 | 90.8 |
| Example 5 | 1308 | 91.3 | 90.1 |
| Example 6 | 1295 | 92.5 | 87.2 |
| Example 7 | 1359 | 87.0 | 90.5 |
| Example 8 | 1327 | 90.4 | 89.7 |
| Example 9 | 1361 | 86.2 | 91.0 |
| Example 10 | 1245 | 92.5 | 86.9 |

(continued)

| No. | initial discharge capacity (mAh/g) | initial capacity efficiency (%) | capacity retention (50 cycles) (%) |
|---|---|---|---|
| Example 11 | 1305 | 93.2 | 91.1 |
| Comparative Example 1 | 1359 | 85.2 | 90.5 |
| Comparative Example 2 | 1317 | 87.7 | 81.5 |
| Comparative Example 3 | 1324 | 88.5 | 85.1 |

Referring to Table 3, in the lithium half-cells of Examples where the phase fraction ratio of the lithium-silicon composite oxide particles was 1.0 or less, and the content of the micro-powder (particles having a particle diameter of less than 3 $\mu$m) was 5 vol% or less based on the total volume of the lithium-silicon composite oxide particles, improved discharge capacity, initial efficiency and capacity retention were provided compared to those from the lithium half-cells using the anode active material of Comparative Examples.

In Example 6, the content of lithium element exceeded 10 wt%, and the initial discharge capacity was relatively lowered compared to those from other Examples.

In Example 7, the content of lithium element was less than 2 wt%, and the initial efficiency was relatively lowered compared to those from other Examples.

In Example 9, the Li/Si molar ratio was less than 0.3, and the initial capacity efficiency was relatively lowered compared to those from other Examples.

In Example 10, the Li/Si molar ratio exceeded 0.8, and the capacity retention was lowered compared to those from other Examples.

The invention is also defined by the following aspects:

Aspect 1. An anode active material for a lithium secondary battery comprising lithium-silicon composite oxide particles, wherein the lithium-silicon composite oxide particles comprise at least one of $Li_2SiO_3$ and $Li_2Si_2O_5$ and have a phase fraction ratio defined by Equation 1 of 1.0 or less, and

a content of particles having a diameter of less than 3 $\mu$m is 5 vol% or less based on a total volume of the lithium-silicon composite oxide particles:

[Equation 1]

$$\text{phase fraction ratio} = I(225)/I(213)$$

wherein, in Equation 1, I(225) is a phase fraction of $Li_2Si_2O_5$ obtained by a Rietveld Refinement using an X-ray diffraction (XRD) analysis, and I(213) is a phase fraction of $Li_2SiO_3$ obtained by the Rietveld Refinement using the XRD analysis.

Aspect 2. The anode active material for a lithium secondary battery of aspect 1, wherein the phase fraction ratio is in a range from 0.05 to 0.8.

Aspect 3. The anode active material for a lithium secondary battery of aspect 1 or aspect 2, wherein a content of a lithium element contained in the lithium-silicon composite oxide particles is in a range from 2 wt% to 10 wt% based on a total weight of the lithium-silicon composite oxide particles.

Aspect 4. The anode active material for a lithium secondary battery of aspect 3, wherein the content of the lithium element contained in the lithium-silicon composite oxide particles is in a range from 4 wt% to 9 wt% based on the total weight of the lithium-silicon composite oxide particles.

Aspect 5. The anode active material for a lithium secondary battery of any one of aspect 1 to 4, wherein an average particle diameter (D50) of the lithium-silicon composite oxide particles is in a range from 4 $\mu$m to 10 $\mu$m.

Aspect 6. The anode active material for a lithium secondary battery of any one of aspect 1 to 5, wherein the lithium-silicon composite oxide particles further comprise an amorphous carbon.

Aspect 7. The anode active material for a lithium secondary battery of aspect 6, wherein the amorphous carbon includes at least one selected from the group consisting of soft carbon, hard carbon, a mesophase pitch oxide and a pyrolyzed coke.

Aspect 8. The anode active material for a lithium secondary battery of aspect 6 or aspect 7, wherein a content of the amorphous carbon is in a range from 1 wt% to 25 wt% based on a total weight of the lithium-silicon composite oxide particles.

Aspect 9. The anode active material for a lithium secondary battery of any one of aspect 1 to 8, further comprising graphite-based particles including at least one selected from the group consisting of natural graphite and artificial graphite.

Aspect 10. The anode active material for a lithium secondary battery of aspect 9, wherein a content of the lithium-silicon composite oxide particles is in a range from 5 wt% to 40 wt% based on a total weight of the lithium-silicon composite oxide particles and the graphite-based particles.

Aspect 11. A lithium secondary battery, comprising:

a cathode; and
an anode facing the cathode and comprising the anode active material for a lithium secondary battery of any one of aspect 1 to 10.

Aspect 12. A method of preparing an anode active material for a lithium secondary battery, comprising:

performing a first firing of silicon sources to form silicon oxide particles;
injecting the silicon oxide particles into a separation apparatus to remove particles having a particle size of less than 3 $\mu$m; and
performing a second firing of a mixture of a lithium source and the silicon oxide particles from which the particles having a particle size of less than 3 $\mu$m are removed to form lithium-silicon composite oxide particles comprising at least one of $Li_2SiO_3$ and $Li_2Si_2O_5$,
wherein a phase fraction ratio defined by Equation 1 of the lithium-silicon composite oxide particles is 1.0 or less:

$$[\text{Equation 1}]$$

$$\text{phase fraction ratio} = I(225)/I(213)$$

wherein, in Equation 1, I(225) is a phase fraction of $Li_2Si_2O_5$ obtained by a Rietveld Refinement using an X-ray diffraction (XRD) analysis, and I(213) is a phase fraction of $Li_2SiO_3$ obtained by the Rietveld Refinement using the XRD analysis.

Aspect 13. The method of aspect 12, wherein the silicon sources comprise silicon particles and $SiO_2$ particles, and the lithium source includes at least one selected from the group consisting of LiOH, Li, LiH, $Li_2O$ and $Li_2CO_3$.

Aspect 14. The method of aspect 12 or aspect 13, wherein the separation apparatus includes a centrifugal force dust collector.

Aspect 15. The method of any one of aspect 12 to 14, wherein a ratio of the number of moles of a lithium element contained in the lithium source relative to the number of moles of a silicon element contained in the silicon oxide particles is in a range from 0.3 to 0.8.

The invention is also defined by the following items:

1. An anode active material for a lithium secondary battery comprising lithium-silicon composite oxide particles, wherein the lithium-silicon composite oxide particles

(i) comprise $Li_2SiO_3$, preferably in combination with $Li_2Si_2O_5$, and
(ii) have a phase fraction ratio defined by Equation 1 of 1.0 or less, and
(iii) the content of the lithium-silicon composite oxide particles having a diameter of less than 3 $\mu$m is 5 vol% or less based on a total volume of the lithium-silicon composite oxide particles:

[Equation 1]

$$\text{phase fraction ratio} = I(225)/I(213)$$

wherein, in Equation 1, I(225) is a phase fraction of $Li_2Si_2O_5$ obtained by a Rietveld Refinement using an X-ray diffraction (XRD) analysis, and I(213) is a phase fraction of $Li_2SiO_3$ obtained by the Rietveld Refinement using the XRD analysis.

2. The anode active material for a lithium secondary battery of item 1, wherein the phase fraction ratio is in a range from 0.05 to 0.8.

3. The anode active material for a lithium secondary battery of item 1 or item 2, wherein the lithium content contained in the lithium-silicon composite oxide particles is in a range from 2 wt% to 10 wt%, preferably from 4 wt% to 9 wt%, based on a total weight of the lithium-silicon composite oxide particles.

4. The anode active material for a lithium secondary battery of any one of items 1 to 3, wherein the content of the lithium element contained in the lithium-silicon composite oxide particles is in a range from 4 wt% to 9 wt% based on the total weight of the lithium-silicon composite oxide particles.

5. The anode active material for a lithium secondary battery of any one of items 1 to 4, wherein an average particle diameter (D50) of the lithium-silicon composite oxide particles is in a range from 4 $\mu$m to 10 $\mu$m.

6. The anode active material for a lithium secondary battery of any one of items 1 to 5, wherein the lithium-silicon composite oxide particles further comprise an amorphous carbon.

7. The anode active material for a lithium secondary battery of item 6, wherein the amorphous carbon includes at least one selected from the group consisting of soft carbon, hard carbon, a mesophase pitch oxide and a pyrolyzed coke.

8. The anode active material for a lithium secondary battery of item 6 or item 7, wherein a content of the amorphous carbon is in a range from 1 wt% to 25 wt% based on a total weight of the lithium-silicon composite oxide particles.

9. The anode active material for a lithium secondary battery of any one of items 1 to 8, further comprising graphite-based particles including at least one selected from the group consisting of natural graphite and artificial graphite.

10. The anode active material for a lithium secondary battery of item 9, wherein a content of the lithium-silicon composite oxide particles is in a range from 5 wt% to 40 wt% based on a total weight of the lithium-silicon composite oxide particles and the graphite-based particles.

11. A method of preparing an anode active material for a lithium secondary battery, comprising:

performing a first firing of at least one silicon source to form silicon oxide particles;
injecting the silicon oxide particles into a separation apparatus to remove particles having a particle size of less than 3 $\mu$m; and
performing a second firing of a mixture of at least one lithium source and the silicon oxide particles from which the particles having a particle size of less than 3 $\mu$m are removed to form lithium-silicon composite oxide particles comprising $Li_2SiO_3$, preferably in combination with $Li_2Si_2O_5$,
wherein a phase fraction ratio defined by Equation 1 of the lithium-silicon composite oxide particles is 1.0 or less:

[Equation 1]

$$\text{phase fraction ratio} = I(225)/I(213)$$

wherein, in Equation 1, I(225) is a phase fraction of $Li_2Si_2O_5$ obtained by a Rietveld Refinement using an X-ray diffraction (XRD) analysis, and I(213) is a phase fraction of $Li_2SiO_3$ obtained by the Rietveld Refinement using the XRD analysis.

12. The method of item 11, wherein the at least one silicon source comprises silicon particles and $SiO_2$ particles, and the at least one lithium source includes at least one selected from the group consisting of LiOH, Li, LiH, $Li_2O$ and $Li_2CO_3$.

13. The method of item 11 or item 12, wherein the separation apparatus includes a centrifugal force dust collector.

14. The method of any one of items 11 to 14, wherein the ratio of the number of moles of lithium contained in the at least lithium source relative to the number of moles of silicon contained in the silicon oxide particles is in a range from 0.3 to 0.8.

15. A lithium secondary battery, comprising:

a cathode; and
an anode facing the cathode and comprising the anode active material for a lithium secondary battery of any one of items 1 to 10 and/or produced by the method according to any one of items 11 to 14.

**Claims**

1. An anode active material for a lithium secondary battery comprising lithium-silicon composite oxide particles,

wherein the lithium-silicon composite oxide particles
(iv) comprise $Li_2SiO_3$, preferably in combination with $Li_2Si_2O_5$, and
(v) have a phase fraction ratio defined by Equation 1 of 0.97 or less:

[Equation 1]

$$\text{phase fraction ratio} = I(225)/I(213)$$

wherein, in Equation 1, I(225) is a phase fraction of $Li_2Si_2O_5$ obtained by a Rietveld Refinement using an X-ray diffraction (XRD) analysis, and I(213) is a phase fraction of $Li_2SiO_3$ obtained by the Rietveld Refinement using the XRD analysis.

2. The anode active material for a lithium secondary battery of claim 1, wherein the phase fraction ratio is in a range from 0.05 to 0.8.

3. The anode active material for a lithium secondary battery of claim 1, wherein a content of the lithium-silicon composite oxide particles having a diameter of less than 3 $\mu$m is 5 vol% or less based on a total volume of the lithium-silicon composite oxide particles.

4. The anode active material for a lithium secondary battery of any one of claims 1 to 3, wherein a lithium content contained in the lithium-silicon composite oxide particles is in a range from 2 wt% to 10 wt%, preferably from 4 wt% to 9 wt%, based on a total weight of the lithium-silicon composite oxide particles.

5. The anode active material for a lithium secondary battery of any one of claims 1 to 4, wherein the content of the lithium element contained in the lithium-silicon composite oxide particles is in a range from 4 wt% to 9 wt% based on the total weight of the lithium-silicon composite oxide particles.

6. The anode active material for a lithium secondary battery of any one of claims 1 to 5, wherein an average particle diameter (D50) of the lithium-silicon composite oxide particles is in a range from 4 $\mu$m to 10 $\mu$m.

7. The anode active material for a lithium secondary battery of any one of claims 1 to 6, wherein the lithium-silicon composite oxide particles further comprise an amorphous carbon.

8. The anode active material for a lithium secondary battery of claim 7, wherein the amorphous carbon includes at least one selected from the group consisting of soft carbon, hard carbon, a mesophase pitch oxide and a pyrolyzed coke.

9. The anode active material for a lithium secondary battery of claim 6 or claim 8, wherein a content of the amorphous carbon is in a range from 1 wt% to 25 wt% based on a total weight of the lithium-silicon composite oxide particles.

10. The anode active material for a lithium secondary battery of any one of claims 1 to 9, further comprising graphite-based particles including at least one selected from the group consisting of natural graphite and artificial graphite.

11. The anode active material for a lithium secondary battery of claim 10, wherein a content of the lithium-silicon composite oxide particles is in a range from 5 wt% to 40 wt% based on a total weight of the lithium-silicon composite oxide particles and the graphite-based particles.

12. A lithium secondary battery, comprising:

a cathode; and
an anode facing the cathode and comprising the anode active material for a lithium secondary battery of any one of claims 1 to 11.

# FIG. 1

# FIG. 2

**EP 4 447 162 A2**

## REFERENCES CITED IN THE DESCRIPTION

**Patent documents cited in the description**

- KR 101591698